(19) Europäisches Patentamt / European Patent Office / Office européen des brevets

(11) **EP 3 413 434 B1**

(12) **EUROPEAN PATENT SPECIFICATION**

(45) Date of publication and mention
of the grant of the patent:
**21.10.2020   Bulletin 2020/43**

(51) Int Cl.:
*H02J 50/12* (2016.01)        *H02J 7/02* (2016.01)
*H02J 7/00* (2006.01)         *H02J 50/10* (2016.01)
*B60L 3/00* (2019.01)         *B60L 3/12* (2006.01)
*B60L 53/12* (2019.01)        *B60L 53/122* (2019.01)

(21) Application number: **17760173.9**

(22) Date of filing: **03.03.2017**

(86) International application number:
**PCT/JP2017/008502**

(87) International publication number:
**WO 2017/150711 (08.09.2017 Gazette 2017/36)**

(54) **POWER SUPPLY SYSTEM AND POWER TRANSMISSION CIRCUIT**

STROMVERSORGUNGSSYSTEM UND STROMÜBERTRAGUNGSSCHALTUNG

SYSTÈME D'ALIMENTATION ÉLECTRIQUE ET CIRCUIT DE TRANSMISSION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.03.2016   JP 2016042523**

(43) Date of publication of application:
**12.12.2018   Bulletin 2018/50**

(73) Proprietor: **Yamaha Hatsudoki Kabushiki Kaisha
Iwata-shi, Shizuoka 438-8501 (JP)**

(72) Inventor: **MIYAZAKI, Toshinori
Iwata-shi
Shizuoka 438-8501 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**JP-A- 2000 125 487        JP-A- 2008 263 779
JP-A- 2008 285 161        JP-A- 2012 050 286
US-A1- 2012 306 269        US-A1- 2013 038 136**

- ZHANG C H ET AL: "Study of high power
  contactless energy transmission for EV
  charging", 2014 IEEE INTERNATIONAL ENERGY
  CONFERENCE (ENERGYCON), IEEE, 13 May
  2014 (2014-05-13), pages 157-162, XP032615558,
  DOI: 10.1109/ENERGYCON.2014.6850422
  [retrieved on 2014-07-08]
- ZHI-HUI WANG ET AL: "Load Detection Model of
  Voltage-Fed Inductive Power Transfer System",
  IEEE TRANSACTIONS ON POWER
  ELECTRONICS, INSTITUTE OF ELECTRICAL
  AND ELECTRONICS ENGINEERS, USA, vol. 28,
  no. 11, 1 November 2013 (2013-11-01), pages
  5233-5243, XP011509209, ISSN: 0885-8993, DOI:
  10.1109/TPEL.2013.2243756
- ZHANG YIMING ET AL: "Closed-Form Oriented
  Modeling and Analysis of Wireless Power
  Transfer System With Constant-Voltage Source
  and Load", IEEE TRANSACTIONS ON POWER
  ELECTRONICS, INSTITUTE OF ELECTRICAL
  AND ELECTRONICS ENGINEERS, USA, vol. 31,
  no. 5, 1 May 2016 (2016-05-01), pages 3472-3481,
  XP011594429, ISSN: 0885-8993, DOI:
  10.1109/TPEL.2015.2465847 [retrieved on
  2015-12-10]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present teaching relates to a power supply system that wirelessly supplies power from a power transmission circuit to a power receiving circuit.

Background Art

In recent years, a wireless power supply system that wirelessly supplies power has been developed. In the wireless power supply system, power is transmitted between a power transmission coil and a power receiving coil that are arranged apart from one another. A technology that is used for increasing power transmission efficiency in the wireless power supply system has been proposed.

For example, a two-wheeled vehicle equipped with a power device which is described in Japanese Patent Application Publication No. 2012-34487 (Patent Document 1 described below) includes a rechargeable battery, a first power receiving coil, a second power receiving coil, and a charging control circuit. The charging control circuit includes a circuit unit that guides power that has been received by each of the first power receiving coil and the second power receiving coil to the rechargeable battery.

US 2012/306269 A1 discloses a method to detect load fluctuation of a wireless power transmission. A wireless power transmitter includes a resonator configured to wirelessly transmit, to a target device, an output power. The wireless power transmitter further includes a power detector configured to detect a current of the output power. The wireless power transmitter further includes a controller configured to detect a change in the current, and to detect a target load based on the change in the current. The target load includes a load of which the output power is applied thereto.

ZHANG C.H. et al, "Study of high power contactless energy transmission for EV charging", 2014 IEEE INTERNATIONAL ENERGY CONFERENCE (ENERGYCON), IEEE, (May 13, 2014), DOI:10.1109/ENERGYCON.2014.6850422 [retrieved on 2014-07-08], pages 157 - 162, disclose investigation of the influences of a contactless transformer and its spacing on the energy transmission of a contactless power converter based on a newly developed equivalent load circuit.

US 2013/038136 A1 discloses a transmitter circuit including a driver circuit coupled to a transmit circuit. Efficiency of a class E amplifier is analyzed over variations of both a resistance and a reactance of a load impedance. In an example, a driver circuit is designed to have a maximum efficiency for a load with a resistance of 15 Ohm and a reactance of 0 Ohm.

CITATION LIST

PATENT LITERATURE

Patent Literature 1: Japanese Patent Application Publication No. 2012-34487

SUMMARY OF INVENTION

PROBLEMS TO BE SOLVED BY INVENTION

In the above-described known power supply system, for example, when the rechargeable battery is removed, there is no longer a load that consumes power that has been received by the power receiving coil, and therefore, a circuit including the power receiving coil is put in a no-load state. However, an influence on a circuit on a power receiving side when the circuit is in a no-load state and a countermeasure therefor are not assumed in the above-described known power supply system.

Therefore, the present application discloses a power supply system, a power transmission circuit, and a power receiving circuit which are able to cope with a no-load state of the power receiving circuit.

SOLUTION TO PROBLEM AND ADVANTAGEOUS EFFECTS OF INVENTION

In wireless power supply, there is a case in which it is desired to increase power supply efficiency and supply a certain amount of power in a short time. In order to do so, a power supply output is preferably increased. The present inventor studied a power transmission circuit and a power receiving circuit that are used for supplying power with a high output. In the study, it has been found that there is a case in which, when the power receiving circuit is put in a no-load state while high output power supply is performed, a voltage of the power receiving circuit increases and a high voltage is applied to the power receiving circuit.

Then, the inventor examined solving this problem by performing a wireless communication between a power transmission circuit and a power receiving circuit. That is, the inventor examined a structure in which, when a power receiving circuit is put in a no-load state, a power transmission circuit is instructed to stop power transmission via a wireless communication. However, in this structure, a time lag from detection of an increase in voltage that is applied to the power receiving circuit to transmission of instructions to the power transmission circuit via a wireless communication occurs. It was found that there is a case in which, during the time lag, the voltage of the power receiving circuit increases to exceed an allowance value. Particularly, it was found that there is a case in which, under a poor radio wave condition, it takes time to perform a wireless communication and, before power transmission is stopped, the voltage of the power receiving circuit exceeds the allowance value.

The inventor conducted various examinations on structures used for detecting a no-load state of a power receiving circuit by a power transmission device including a power transmission circuit. As one of the examinations, the inventor examined a structure of a resonance circuit in which, when the power receiving circuit is put in a no-load state, an operation of a resonance circuit of the power transmission circuit changes accordingly such that such a change is detectable. In this case, in general, in order to ensure power transmission efficiency, both of resonance circuits of a power transmission circuit and a power receiving circuit are configured such that reactance is 0, that is, a resonance condition is satisfied. Through trial and error, the inventor intentionally configured a circuit such that the reactance of a resonance circuit of a power transmission circuit is not 0 and found that, when the power receiving circuit is put in a no-load state, an operation of the resonance circuit of the power transmission circuit changes to an extent to which such a change is detectable. Based on this finding, the inventor arrived at embodiments below, the invention itself being specified in the appended claims.

(First Structure)

A power supply system in a first structure according to an embodiment of the present teaching includes a power receiving circuit and a power transmission circuit that wirelessly supplies power to the power receiving circuit. The power supply system is a wireless power supply system. The power transmission circuit includes a power transmission resonance circuit including an inductor having self-inductance L1 and a capacitor having capacity C1. The power receiving circuit includes a power receiving resonance circuit including an inductor having self-inductance L2 and a capacitor having capacity C2. The power transmission resonance circuit is driven at a driving frequency $\omega$ and thereby performs power transmission from the power transmission circuit to the power receiving circuit. The self-inductance L1, the capacity C1, the self-inductance L2, the capacity C2, and the driving frequency $\omega$ are set such that an absolute value of reactance X1 of the power transmission resonance circuit, which is determined by the self-inductance L1, the capacity C1, and the driving frequency $\omega$, is larger than a first threshold Th1 which is not smaller than 0, and reactance X2 of the power receiving resonance circuit, which is determined by the self-inductance L2, the capacity C2, and the driving frequency $\omega$, is 0, which in addition includes a case in which there is an error with which, in terms of an operation of the power receiving circuit (6), the condition X2 is 0 is substantially satisfied. The power supply system includes a detection unit that detects a no-load state of the power receiving circuit, based on at least one of a DC voltage, a DC current, a voltage of the inductor having self-inductance L1, a current of the inductor having self-inductance L1, or temperature of the inductor having self-inductance L1 in the power transmission circuit (the first structure).

The inventor found that, as described in the above-described first structure, in a case in which the absolute value of the reactance X1 of the power transmission resonance circuit on a transmission side (that is, a primary side) is set to be larger than the first threshold Th1 ($|X1| > Th1$ ($Th1 \geq 0$)) and the reactance X2 of the power receiving resonance circuit on a power receiving side (that is, a secondary side) is set so as to be substantially 0 ($|X2| = 0$), when the power receiving circuit is in a load state, a resonance condition for the power transmission circuit and the power receiving circuit are good and, when the power receiving circuit is put in a no-load state while receiving power, a change occurs in a behavior of the power transmission circuit. In the above-described first structure, when the power receiving circuit is in a load state, it is possible to highly efficiently transmit power from the power transmission circuit to the power receiving circuit and, when the power receiving circuit is put in a no-load state while receiving power, a fault of the power receiving circuit is detected by the detection unit, based on a change in operation of the power transmission circuit. Thus, it is possible to cope with a no-load state of the power receiving circuit. It is enabled by shifting only the reactance X1 of the power transmission resonance circuit from 0 to restrain reduction in efficiency and also perform detection of a no-load state, as compared to a case in which each of both of the reactance X1 of the power transmission resonance circuit and the reactance X2 of the power receiving resonance circuit is set to be 0 or is shifted from 0.

Note that the above-described form of $|X1| > Th1$ is not limited to a case in which the absolute value of the reactance X1 is strictly larger than the first threshold Th1. In terms of an operation of the power transmission circuit, an error with which it may be considered that $|X1| > Th1$ is substantially satisfied may be allowed. Also, a value of X1 may be calculated from values of L1, C1, and $\omega$. Similarly, a form of X2 = 0 includes, in addition to a case in which the reactance X2 is strictly 0, a case in which there is an error with which, in terms of an operation of the power receiving circuit, it may be considered that X2 = 0 is substantially satisfied. The value of X2 may be calculated from values of L2, C2, and ω.

The detection unit is able to detect a fault of the power receiving circuit, for example, based on at least one of a voltage and a current of the power transmission circuit. For example, the detection unit is able to detect a fault of the power receiving circuit by detecting a state in which the voltage or the current of the power transmission circuit is different from that during a normal state.

(Second Structure)

In the above-described first structure, when the power receiving circuit is in in a no-load state and then the power transmission resonance circuit is driven, the threshold Th1 may be set to be a value with which a phase difference between a phase of a current and a phase of a voltage of the power transmission resonance circuit is detectable (a second structure). Thus, in the power transmission circuit, it is easier to detect a no-load state of the power receiving circuit. As described above, by further limiting an extent of the threshold Th1, reduction in efficiency may be further reduced and also a no-load state may be restrained.

(Third Structure)

In the first structure or the second structure described above, the self-inductance L1 of the inductor of the power transmission resonance circuit, the capacity C1 of the capacitor of the power transmission resonance circuit, the self-inductance L2 of the inductor of the power receiving resonance circuit, the capacity C2 of the capacitor of the power receiving resonance circuit, and the driving frequency ω may be set such that a power factor when there is a load in the power receiving circuit is larger than a power factor when the power receiving circuit is in a no-load state (a third structure).

In the above-described third embodiment, when the power receiving circuit is in a load state, power transmission with a large power factor and high efficiency is possible. When the power receiving circuit is in a no-load state, the power factor is reduced and a more noticeable change occurs in operation of the power transmission circuit. Therefore, in the power transmission circuit, it is easier to detect a no-load state of the power receiving circuit. In the above-described third structure, for example, L1, C1, L2, C2, and ω, which have been described above, may be set such that the power factor when there is a load in the power receiving circuit is close to 1 and the power factor when the power receiving circuit is in a no-load state is smaller than 1. Note that, when there is a load in the power receiving circuit, that is, when the power receiving circuit is in a load state, a state in which a load used for supplying power that has been generated in the resonance circuit of the power receiving circuit is coupled to the power receiving circuit may be achieved.

(Fourth Structure)

In any one of the above-described first to third structures described above, the threshold Th1 may be a value equal to or larger than resistance r1 of the power transmission resonance circuit (a fourth structure). Thus, it is possible to perform, when the power receiving circuit is in a load state, power transmission with higher efficiency and to cause, when the power receiving circuit is in a no-load state, a more noticeable change to occur in an operation of the power transmission circuit.

(Fifth Structure)

In any one of the above-described first to fourth structures described above, the power transmission circuit may include an inverter that converts a DC current from a DC power source to an AC current and supplies the AC current to the power transmission resonance circuit. In this case, the detection unit may be configured to detect a no-load state of the power receiving circuit, based on a value of the DC current or a phase difference between a phase of a current and a phase of a voltage of the power transmission resonance circuit (a fifth structure).

The inventor found that, when a power receiving circuit is put in a no-load state, a phase difference occurs between a current and a voltage of a power transmission resonance circuit and a DC current of the inverter changes. Therefore, with the above-described fifth structure, in the power transmission circuit, a no-load state of the power receiving circuit may be detected, based on the value of the DC current or the phase difference between the phase of the current and the phase of the voltage of a power transmission resonance circuit.

(Sixth Structure)

In any one of the above-described first to fifth structures described above, the power supply system may further include a control unit that stops, when the detection unit detects a no-load state of the power receiving circuit, power transmission by the power transmission circuit (a sixth structure). Thus, it is possible to stop, when the power receiving circuit is put in a no-load state, power transmission and reduce increase in voltage of the power receiving circuit.

In a power supply system having any one of the first to sixth structures described above, the self-inductance L1, the capacity C1, and the driving frequency $\omega$ may be set such that the absolute value of the reactance X1 is smaller than a second threshold Th2. The second threshold Th2 may be a value that has been determined in accordance with resistance $R_2$ of the power receiving circuit and required power transmission efficiency. Thus, power transmission efficiency when the power receiving circuit is in a load state may be more reliably ensured.

A power transmission circuit in a power supply system having any one of the first to sixth structures described above is also included in an embodiment of the present teaching.

BRIEF DESCRIPTION OF DRAWINGS

[FIG. 1] FIG. 1 is a diagram illustrating an example of a structure of a power supply system according to an embodiment.

[FIG. 2] FIG. 2 is a circuit diagram of a power transmission resonance circuit and a power receiving resonance circuit illustrated in FIG. 1.

[FIG. 3] FIG. 3 is a circuit diagram illustrating an example of a case in which a power receiving circuit illustrated in FIG. 1 is put in a no-load state.

[FIG. 4] FIG. 4 is a diagram illustrating an equivalent circuit of a circuit illustrated in FIG. 2.

[FIG. 5A] FIG. 5A is a graph illustrating an example of waveforms of a DC current of a power transmission circuit and a power reception voltage when the power supply system illustrated in FIG. 1 is driven under a typical resonance condition.

[FIG. 5B] FIG. 5B is a graph illustrating an example of waveforms of a transmission coil current and an output voltage of an inverter at time t1 in the graph illustrated in FIG. 5A.

[FIG. 5C] FIG. 5C is a graph illustrating an example of waveforms of a power transmission coil current and an output voltage of an inverter at time t3 in the graph illustrated in FIG. 5A.

[FIG. 6A] FIG. 6A is a graph illustrating an example of waveforms of a DC current of a power transmission circuit and a power reception voltage when the power supply system illustrated in FIG. 1 is driven under a resonance condition of Expression (1).

[FIG. 6B] FIG. 6B is a graph illustrating an example of waveforms of a power transmission coil current and an output voltage of an inverter at time t1 in the graph illustrated in FIG. 6A.

[FIG. 6C] FIG. 6C is a graph illustrating an example of waveforms of a power transmission coil current and an output voltage of an inverter at time t3 of the graph illustrated in FIG. 6A.

[FIG. 7] FIG. 7 is a diagram illustrating a wireless power supply system according to the embodiment.

DESCRIPTION OF EMBODIMENTS

A power supply system according to an embodiment of the present teaching will be described below with reference to the accompanying drawings. In the drawings, the same or corresponding parts are denoted by the same reference character and the description of the corresponding member is not repeated.

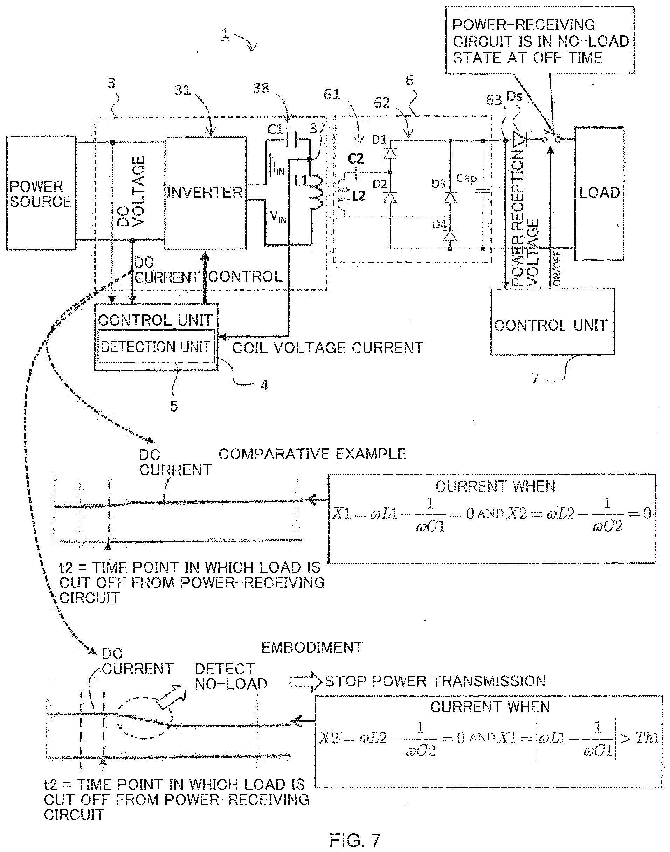

FIG. 7 is a diagram illustrating a power supply system 1 in this embodiment. The power supply system 1 includes a power receiving circuit 6 and a power transmission circuit 3 that wirelessly supplies power to the power receiving circuit 6. The power transmission circuit 3 includes a power transmission resonance circuit 38 including an inductor having self-inductance L1 and a capacitor having capacity C1. The power receiving circuit 6 includes a power receiving resonance circuit 61 including an inductor having self-inductance L2 and a capacitor having capacity C2. The power transmission resonance circuit 38 is driven at a driving frequency $\omega$ and thereby performs power transmission from the power transmission circuit 3 to the power receiving circuit 6. An absolute value of reactance X1 of the power transmission resonance circuit 38, which is determined by the self-inductance L1, the capacity C1, and the driving frequency $\omega$, is set to be larger than a first threshold Th1 which is not smaller than 0 and an absolute value of reactance X2 of the power receiving resonance circuit 61, which is determined by the self-inductance L2, the capacity C2, and the driving frequency $\omega$, is set to be substantially 0. The power supply system 1 includes a detection unit 5 that detects a fault of the power receiving circuit 6, based on a state (for example, a DC current) of the power transmission circuit 3. The wireless power supply system 1 may include a control unit 4 that stops, when the detection unit 5 detects a fault, power transmission by the power transmission circuit 3.

[Structure Example of Power Supply System]

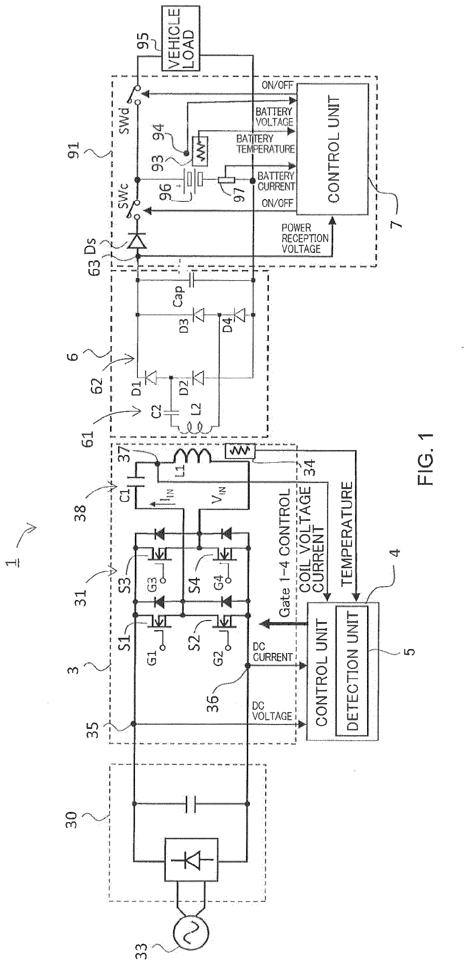

FIG. 1 is a diagram illustrating an example of a structure of a wireless power supply system according to this embodiment. The wireless power supply system 1 will be hereinafter merely referred to as the power supply system 1. The power supply system 1 illustrated in FIG. 1 includes a power transmission circuit 3 and a power receiving circuit 6. The power transmission circuit 3 wirelessly supplies power to the power receiving circuit 6. According to this embodiment, as an example, wireless power supply by the power supply system 1 is used for battery charging for a straddled vehicle, but use of the power supply system 1 is not limited thereto.

<Structure Example of Power Transmission Side>

In an example illustrated in FIG. 1, the power transmission circuit 3 is coupled to a DC power supply unit 30 (an example of a DC power source) and a control unit 4. The power transmission circuit 3 receives supply of DC power from the DC power supply unit 30. An operation of the power transmission circuit 3 is controlled by the control unit 4. The power transmission circuit 3 includes an inverter 31 and a power transmission resonance circuit 38 (a resonance circuit on a primary side). The inverter 31 converts a DC current from the DC power supply unit 30 to an AC current and supplies the AC current to the power transmission resonance circuit 38. The power transmission resonance circuit 38 includes an inductor (which will be hereinafter referred to as a power transmission coil (L1)) the self-inductance L1 and a capacitor (which will be referred to as a capacitor (C1)) having the capacity C1. The power transmission resonance circuit 38 is driven at a driving frequency $\omega$ in accordance with an AC signal from the inverter 31. Power is transmitted from the power transmission circuit 3 to the power receiving circuit 6 by driving the power transmission resonance circuit 38. As described above, the power transmission circuit 3 includes the power transmission resonance circuit 38 on the primary side and a circuit used for driving the power transmission resonance circuit 38.

The DC power supply unit 30 is, as an example, a stabilized DC power source that generates a DC power source from an AC power source 33. As the DC power supply unit 30, a constant voltage power source (for example, a commercially available AC adaptor) which is controlled such that an output voltage is constant may be used. Note that, as the DC power supply unit 30, a constant current power source that is controlled such that an output current is constant or a constant-voltage-and-constant-current power source that causes an output voltage and an output current to be constant may be used.

The inverter 31 includes two switching element pairs (S1 and S2, and S3 and S4) used for controlling a direction and a timing of input of a current to the power transmission resonance circuit 38. Each of the switching element pairs includes switching elements coupled in series. Each switching element pair is coupled between a positive electrode terminal and a negative electrode terminal of the DC power supply unit 30. A node between a switching element pair S1 and S2, which is one of the two switching element pairs, is coupled to one end of the power transmission resonance circuit 38. A node between a switching element pair S3 and S4, which is the other switching element pair, is coupled to the other end of the power transmission resonance circuit 38. The power transmission coil (L1) and the capacitor (C1) are coupled in series between the one end and the other end of the power transmission resonance circuit 38.

An operation of the inverter 31 is controlled by a drive signal that is input to each of respective gates G1 to G4 of switching elements S1 to S4. The drive signal is supplied from the control unit 4. The control unit 4 supplies, as the drive signal, a PWM signal to the switching elements S1 to S4. Thus, the PWM (pulse width) controlled drive signal (an AC current) is input to the power transmission resonance circuit 38. In accordance with a frequency of the drive signal that is output from the inverter 31 to the power transmission resonance circuit 38, the driving frequency $\omega$ of the power transmission resonance circuit 38 is determined. The control unit 4 may include, for example, a CPU or a control IC which is used for PWM-controlling the inverter 31. A gate driver (not illustrated) which is used for applying a voltage in accordance with the drive signal to the gates G1 to G4 may be provided between the control unit 4 and the switching elements S1 to S4.

The power transmission circuit 3 includes a DC voltage detection unit 35 used for detecting a DC voltage from the DC power supply unit 30, a DC current sensor 36 that detects a DC current, a coil voltage current detection unit 37 used for detecting a voltage and a current of the power transmission coil (L1), and a temperature sensor 34 that detects temperature of the power transmission coil (L1). As the DC current sensor 36, for example, a hall sensor or a shunt resistance current sensor may be used. The coil voltage current detection unit 37 may include a voltage sensor that detects a voltage of the power transmission coil (L1) and a current sensor that detects a current of the power transmission coil (L1). Thus, a DC voltage, a DC current, a voltage and a current of the power transmission coil L1, and temperature of the power transmission coil L1 in the power transmission circuit 3 are taken in the control unit 4.

The control unit 4 is able to control the inverter 31, based on at least one of the DC voltage, the DC current, the voltage of the power transmission coil (L1), the current of the power transmission coil (L1), and the temperature of the power transmission coil (L1) in the power transmission circuit 3.

Also, the control unit 4 includes a detection unit 5 that detects a fault of the power receiving circuit 6, based on an operation of the power transmission circuit 3. The detection unit 5 is able to detect a fault of the power transmission circuit 3 or the power receiving circuit 6, based on at least one of the DC voltage, the DC current, the voltage of the power transmission coil (L1), the current of the power transmission coil (L1), and the temperature of the power transmission coil (L1) in the power transmission circuit 3. For example, the detection unit 5 is able to detect a no-load state of the power receiving circuit 6, based on the DC voltage or the voltage and the current of the power transmission coil (L1) in the power transmission circuit 3.

When the detection unit 5 detects a fault, the control unit 4 is able to stops driving the power transmission resonance circuit 38 and thus stop power transmission by the power transmission circuit 3. For example, when the detection unit 5 detects a no-load state of the power receiving circuit 6, the control unit 4 is able to stop power transmission by the power transmission circuit 3. In order to stop power transmission, for example, the control unit 4 stops supply of a drive signal to the inverter 31 to stop an operation of the inverter 31. Thus, the power transmission resonance circuit 38 stops driving.

<Structure Example of Power Receiving Side>

The power receiving circuit 6 is coupled to a battery 96. The battery 96 is coupled to a battery management unit (which will be hereinafter referred to as a battery management controller 91 (which will be hereinafter referred to as BMC 91)). The BMC 91 monitors a state of the battery 96 and controls charging and discharging of the battery 96. The BMC 91 includes a control unit 7. The control unit 7 includes, for example, a processor, such as a CPU or the like. The battery 96 is coupled to the power receiving circuit 6 and a vehicle load 95 via the BMC 91. Connection of the power receiving circuit 6 and the battery 96 may be controlled by the BMC 91. Note that the BMC will be sometimes referred to as a battery management unit (BMU) or a battery management system (BMS).

The vehicle load 95 is, for example, a power device, such as a motor or the like, of a drive unit, a display device, or the like included in a straddled vehicle. When the straddled vehicle is a bicycle, a structure in which pedal stepping force is assisted by the power device of the drive unit may be employed. The drive unit receives supply of power from the battery 96.

The power receiving circuit 6 includes a power receiving resonance circuit 61 (a resonance circuit on the secondary side) and a rectifier circuit 62. The power receiving resonance circuit 61 generates an AC current by electromagnetic induction by the AC current of the power transmission resonance circuit 38 of the power transmission circuit 3. The rectifier circuit 62 rectifies and filters the AC current that is generated by the power receiving resonance circuit 61 and outputs the rectified and filtered AC current to the BMC 91. That is, the rectifier circuit 62 converts received AC power to DC power that can be charged in the battery 96. The power receiving circuit 6 is a circuit that includes the power receiving resonance circuit 61 on the secondary side and is coupled to a load (the battery 96 as an example) which supplies power that is generated by the power receiving resonance circuit 61.

The power receiving resonance circuit 61 includes the inductor (which will be hereinafter referred to as a power receiving coil (L2)) of the self-inductance L2 and the capacitor (which will be hereinafter referred to as a capacitor (C2)) of the capacity C2. The rectifier circuit 62 includes diodes D1 and D2 that are coupled to both sides of one end of the power receiving resonance circuit 61 so as to face in the same direction, diodes D3 and D4 that are coupled to both sides of the other end of the power receiving resonance circuit 61 so as to face in the same direction, and a capacitor Cap coupled to the diodes D1 and S2 and the diodes D3 and D4 in parallel. The power receiving coil (L2) and the capacitor (C2) are coupled in series between the one end and the other end of the power receiving resonance circuit 61.

Also, a reverse voltage prevention diode Ds is provided between the rectifier circuit 62 and the battery 96 (a charging switch SWc). A detection unit 63 for a power reception voltage is provided on a closer side of the reverse voltage prevention diode Ds to the rectifier circuit 62. A current from the battery 96 does not flow on the closer side to the rectifier circuit 62 because of the reverse voltage prevention diode Ds, and therefore, in the detection unit 63 for a power reception voltage, a DC voltage (a power reception voltage) caused by power reception via the power receiving resonance circuit 61 is detected. The detection unit 63 and the reverse voltage prevention diode Ds may be component members of the BMC 91.

The BMC 91 includes a charging switch SWc used for allowing or prohibiting charging into the battery 96 and a discharging switch SWd used for allowing or prohibiting discharging into the vehicle load 95 from the battery 96. Also, the BMC 91 includes a current sensor 97 that detects a charging and discharging current of a battery, a battery voltage detection circuit 94 that detects a voltage of the battery 96, and a temperature sensor 93 that detects temperature of the battery. The battery 96 includes, for example, cells of a plurality of lithium ion batteries. The battery voltage detection circuit 94 detects a voltage for each cell and a voltage (an overall cell voltage) of the cells as a whole.

The power reception voltage, the current of the battery 96, the voltage of the battery 96, and the temperature of the battery 96 are taken in the control unit 7. Also, a signal that controls on and off of the charging switch SWc and the discharging switch SWd is supplied from the control unit 7. The control unit 7 is able to control prohibition or allowance of charging and prohibition or allowance of discharging, based on the power reception voltage, the current of the battery 96, the voltage of the battery 96, and the temperature of the battery 96. Note that, separately from the CPU of the control unit 7, a control IC that performs control of charging and discharging may be provided in the BMC 91.

<Setting Example for Resonance Circuit>

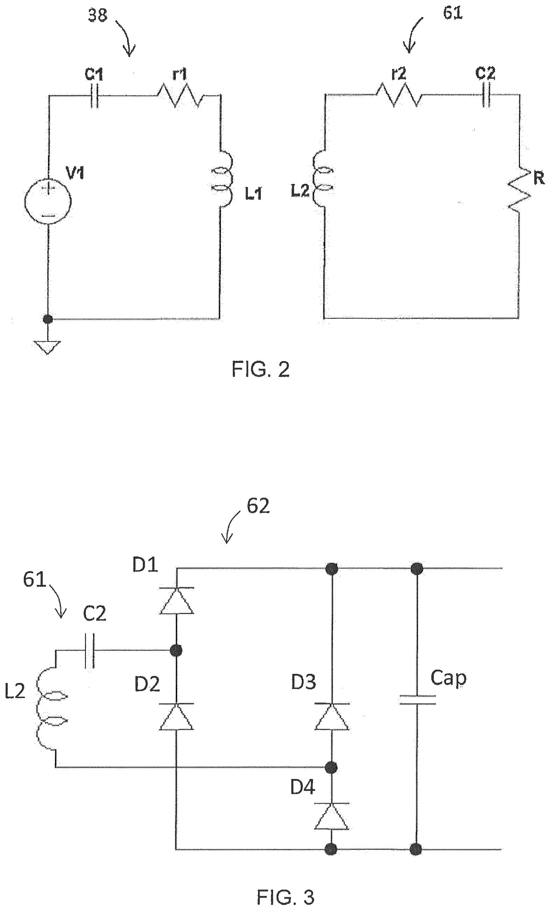

FIG. 2 is a circuit diagram of the power transmission resonance circuit 38 and the power receiving resonance circuit 61 which are illustrated in FIG. 1. In supplying power from the power transmission circuit 3 to the power receiving circuit 6, the power transmission coil (L1) is arranged near the power receiving coil (L2). When an AC current of the driving frequency ω is caused to flow in the power transmission resonance circuit 38, a magnetic flux changes and the AC current of the driving frequency ω flows also in the power receiving coil (L2) of the power receiving circuit 6 due to electromagnetic induction. Thus, power is wirelessly transmitted.

In an example illustrated in FIG. 2, the power transmission resonance circuit 38 includes a resistance r1 (a resistance value = r1) as a resistance that is coupled to the power transmission coil (L1) in series. The power receiving resonance circuit 61 includes a resistance r2 (a resistance value = r2) as a resistance that is coupled to the power receiving coil (L2) in series. The resistances r1 and r2 may be, for example, resistance components of an element and a wiring included in the power transmission resonance circuit 38 and the power receiving resonance circuit 61. Also, a load of a resistance value R is coupled to the power receiving resonance circuit 61. This corresponds to, for example, a load including the battery 96 illustrated in FIG. 1.

In this embodiment, the absolute value of the reactance X1 of the power transmission resonance circuit 38, which is determined by the self-inductance L1, the capacity C1, and the driving frequency ω, is set so as to be larger than the threshold Th1 (Th1 ≥ 0) and the reactance X2 of the power receiving resonance circuit 61 on the power receiving side, which is determined by the self-inductance L2, the capacity C2, and the driving frequency ω, is set so as to be substantially 0. That is, the values of L1, C1, ω, L2, and C2 are set so as to satisfy a condition of Expression (1) below.

[Math 1]

$$X2 = \omega L2 - \frac{1}{\omega C2} = 0 \text{ AND } X1 = \left| \omega L1 - \frac{1}{\omega C1} \right| > Th1 \qquad (1)$$

In Expression (1) above, the reactance X1, X2 of the power transmission resonance circuit 38 and the power receiving resonance circuit 61 is reactance obtained by combining inductive reactance and capacitive reactance, that is, combined reactance of inductive reactance and capacitive reactance.

When the power receiving circuit 6 is in a load state, efficiency of power transmission from the power transmission circuit 3 to the power receiving circuit 6 may be ensured by the above-described setting. Also, when the power receiving circuit 6 is put in a no-load state while receiving power, a characteristic change occurs in behavior of the power transmission circuit 3. Therefore, it is possible to detect, in the power transmission circuit 3, a no-load state of the power receiving circuit 6. This will be described in detail below.

In a structure illustrated in FIG. 2, a load (which will be hereinafter referred to as a load (R)) which has a resistance value R is coupled to the power receiving resonance circuit 61 on the power receiving side. A state in which a load that is a resistance coupled to the power receiving resonance circuit 61 is eliminated is a no-load state. In the example illustrated in FIG. 2, a state in which a circuit constant of the load is infinite (R→∞) is a no-load state. In a structure illustrated in FIG. 1, for example, in a state in which the battery 96 has been removed, or a state in which the charging switch SWc is in an off state, the power receiving circuit 6 is put in a no-load state.

FIG. 3 is a circuit diagram illustrating an example of a case in which the power receiving circuit 6 illustrated in FIG. 1 is put in a no-load state. As described above, a state in which a load is not coupled to an output terminal that is used for outputting power that has been generated in the power receiving resonance circuit 61 is a no-load state of the power receiving circuit 6.

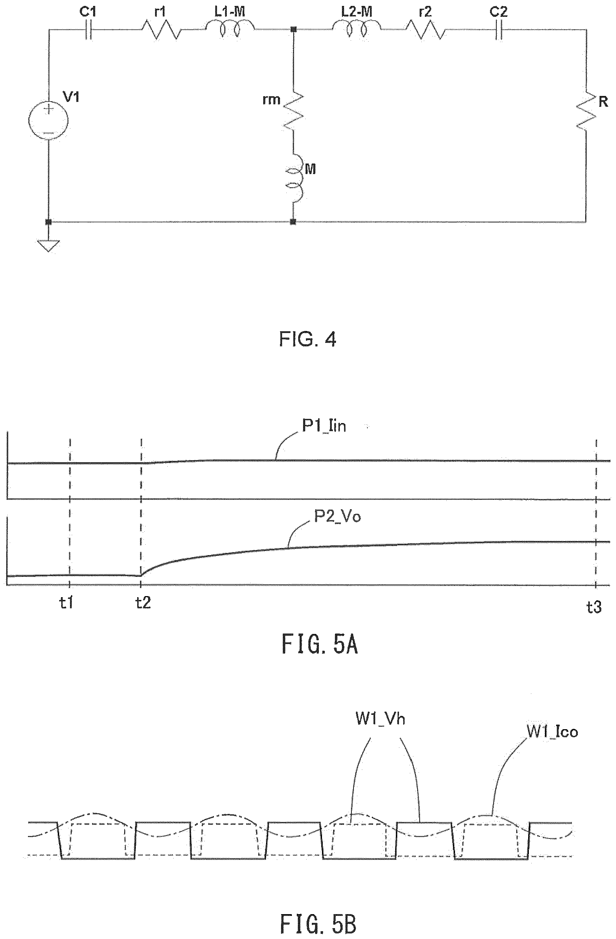

FIG. 4 is a diagram illustrating an equivalent circuit of the circuit illustrated in FIG. 2. In an example illustrated in FIG. 4, coupling of the power transmission coil (L1) and the power receiving coil (L2) is indicated by a resistance of a resistance value rm and an inductor of mutual inductance M which are coupled to a node between the power transmission coil (L1) and the power receiving coil (L2).

In general, in the structure illustrated in FIG. 2, a condition for resonance of the power transmission resonance circuit 38 and the power receiving resonance circuit 61 is expressed by Expression (2) below.

[Math 2]

$$X1 = \omega L1 - \frac{1}{\omega C1} = 0 \text{ AND } X2 = \omega L2 - \frac{1}{\omega C2} = 0 \qquad (2)$$

Under the condition of Expression (2) above, a load voltage $V_R$, efficiency $\eta$, and a power factor $\cos\theta$ when the load of the resistance R is coupled to the power receiving resonance circuit 61, that is, in a load state, are expressed by Expressions (3), (4), and (5) below, respectively. $V_{in}$ is an input voltage that is input to the power transmission resonance circuit 38. $R_2$ is a resistance (a combined resistance) of the power receiving circuit 6.
[Math 3]

$$\text{LOAD VOLTAGE } V_R = \frac{j\omega MR}{r_1 R_2 + (\omega M)^2} \cdot V_{in} \qquad (3)$$

$$\text{EFFICIENCY } |\eta| = \frac{(\omega M)^2 R}{R_2 \cdot \{ r_1 R_2 + (\omega M)^2 \}} \qquad (4)$$

$$\text{POWER FACTOR } \cos\theta = 1 \qquad (5)$$

Under the condition of Expression (2) above, a load voltage $V'_R$, efficiency $\eta'$, and a power factor $\cos\theta'$ when the load of the resistance R is not coupled to the power receiving resonance circuit 61, that is, in a no-load state, are expressed by Expressions (6), (7), and (8) below, respectively.
[Math 4]

$$\text{LOAD VOLTAGE } V'_R = \frac{j\omega M}{r_1} \cdot V_{in} \qquad (6)$$

$$\text{EFFICIENCY } |\eta'| = 0 \qquad (7)$$

$$\text{POWER FACTOR } \cos\theta' = 1 \qquad (8)$$

When L1, C1, $\omega$, L2, and C2 are set under the typical resonance condition expressed by Expression (2) above, in both of a load state and a no-load state, the power factor is the same value (the power factor = 1). In this case, a characteristic change in behavior of the power transmission circuit 3 between a load state and a no-load state is not observed. Therefore, it is difficult to detect a no-load state of the power receiving circuit 6 in the power transmission circuit 3. Also, during a no-load state, power is transmitted with the same power factor as that in a load state, and therefore, the power reception voltage of the power receiving circuit 6 is markedly increased.
As an example, a case in which, assuming the threshold Th1 = r1, L1, C1, $\omega$, L2, and C2 are set so as to satisfy a resonance condition of Expression (9) below will be described below.
[Math 5]

$$X2 = \omega L2 - \frac{1}{\omega C2} = 0 \text{ AND } X1 = \left| \omega L1 - \frac{1}{\omega C1} \right| > r_1 \qquad (9)$$

Under the condition of Expression (9) above, the load voltage $V_R$, the efficiency $\eta$, and the power factor $\cos\theta$

when the load of the resistance R is coupled to the power receiving resonance circuit 61, that is, in a load state, are expressed by Expressions (10), (11), and (12) below, respectively. $V_{in}$ is an input voltage that is input to the power transmission resonance circuit 38. $R_2$ is a resistance (combined resistance) of the power receiving circuit 6.

[Math 6]

$$\text{LOAD VOLTAGE } V_R = \frac{j\omega MR}{r_1 \cdot R_2 + (\omega M)^2 + jR_2 \cdot X1} \cdot V_{in} \qquad (10)$$

$$\text{EFFICIENCY } |\eta| = \frac{(\omega M)^2 \cdot R}{R_2^2} \sqrt{\frac{R_2^2}{\left\{r_1 R_2 + (\omega M)^2\right\}^2 + R_2^2 X1^2}} \qquad (11)$$

$$\text{POWER FACTOR } \cos\theta = \frac{r_1 R_2 + (\omega M)^2}{\sqrt{\left\{r_1 R_2 + (\omega M)^2\right\}^2 + R_2^2 X1^2}} \qquad (12)$$

Under the condition of Expression (9), the load voltage $V'_R$, the efficiency $\eta'$, and the power factor $\cos\theta'$ when the load of the resistance R is not coupled to the power receiving resonance circuit 61, that is, in a no-load state, are expressed by Expressions (13), (14), and (15) below, respectively.

[Math 7]

$$\text{LOAD VOLTAGE } V'_R = \frac{j\omega M}{r_1 + jX1} \cdot V_{in} \qquad (13)$$

$$\text{EFFICIENCY } |\eta'| = 0 \qquad (14)$$

$$\text{POWER FACTOR } \cos\theta' = \frac{1}{\sqrt{1 + \frac{X1^2}{r_1^2}}} \qquad (15)$$

When L1, C1, $\omega$, L2, and C2 are set under the resonance condition expressed by Expression (9) above, a power factor in a load state is larger than a power factor in a no-load state. More specifically, the power factor in the load state is close to 1 and the power factor in the no-load state is smaller than 1. Thus, in the power transmission circuit 3, a current that is input to the power transmission resonance circuit 38 is smaller during a no-load state than during a load state. Therefore, when the power receiving circuit 6 is put in a no-load state from a load state while power is transmitted from the power transmission circuit 3 to the power receiving circuit 6, the level of an input current of the power transmission resonance circuit 38 is reduced. In the power transmission circuit 3, it is possible by detecting this change of the current to detect a no-load state of the power receiving circuit 6.

Also, when L1, C1, $\omega$, L2, and C2 are set under the resonance condition expressed by Expression (9) above, increase in output voltage of the power receiving resonance circuit 61 in the no-load state is restrained, as compared to a case in which L1, C1, $\omega$, L2, and C2 are set under the resonance condition expressed by Expression (2) above.

Table 1 below shows a result of a simulation when the equivalent circuit illustrated in FIG. 4 is driven under the resonance condition of Expression (2) above and the resonance condition of Expression (9) above. In this simulation, L1, L2, C1, C2, $\omega$, M, and r1 were set as shown in the table below. As the mutual inductance M, a value when a coupling coefficient k = 0.25 was used. A difference between the condition of Expression (2) above and the condition of Expression (9) above was set by assuming that L1 = L2, X2 = 0, C2 = 4.38 × 10$^{-8}$ and changing C1.

[Table 1]

| | DRIVING FREQUENCY | | SELF-INDUCTOR | CAPACITY OF CAPACITOR | MUTUAL INDUCTANCE | RESISTANCE | REACTANCE | OUTPUT VOLTAGE AT TIME WITH LOAD | INPUT CURRENT (WITH LOAD → WITHOUT LOAD) | OUTPUT VOLTAGE AT TIME WITHOUT LOAD |
|---|---|---|---|---|---|---|---|---|---|---|
| | F[kHz] | ω | L1,L2[uH] | C1[nF] | M[uH] | r1[mΩ] | X1[Ω] | $V_R$[V] | Iin[A] | $V_R$[V] |
| (2) | 85 | 534.07 | 80 | 43.8 | 20 | 10 | 0 | 33.7 | 3.15→3.15 | 25635 |
| (9) | 85 | 534.07 | 80 | 48.2 | 20 | 10 | 3.88 | 30.0 | 2.81→0.21 | 66.0 |

In the result shown in Table 1 above, a value of an input current Iin to the power transmission circuit 3 did not differ under the resonance condition of Expression (2) between the time with a load and the time without a load. In contrast, under the resonance condition of Expression (9), as compared to the input current Iin at the time with a load, the input current Iin at the time without a load has been reduced. Also, the degree of increase in the output voltage $V_R'$ at time without a load is larger under the resonance condition of Expression (2) than under the resonance condition of Expression (9).

As expressed in Expression (9) above, the threshold Th1 is set to the resistance r1 of the power transmission resonance circuit 38, and thereby, it is possible to cause the power factor when the power receiving circuit 6 is in a load state to be close to 1 and to reduce the power factor in a no-load state to a much lower value than 1. Thus, an advantage of restraining increase in voltage of the power receiving circuit 6 in a no-load state while receiving power and an advantage of detecting a no-load state of the power receiving circuit 6 in the power transmission circuit 3 may be more reliably achieved. Note that the threshold Th1 is not limited to Th1 = r1. Similar advantages may be achieved by causing the threshold to be Th1 > r1.

A method for determining the threshold Th1 is not limited to a method in which, as described above, the resistance r1 is used as a reference. It is also possible to set the threshold Th1, based on the power factors in a no-load state and in a load state. For example, it is possible to measure or calculate the power factors in a no-load state and a load state by variously changing Th1 (that is, X1) in Expression (1) above under a condition that satisfies an expression obtained by replacing an inequality sign ">" on a left side of Th1 with an equality sign "=". Thus, it is possible to calculate the value of the threshold Th1 with which the power factors in a no-load state and a load state satisfy a predetermined condition. For example, it is possible to set the threshold Th1 such that the power factor when the power receiving circuit is in a load state is larger than the power factor when the power receiving circuit is in a no-load state. As another option, it is also possible to set the threshold Th1 such that a difference between the power factor when the power receiving circuit is in a load state and the power factor when the power receiving circuit is in a no-load state is a predetermined value or more.

Also, the threshold Th1 may be determined from a viewpoint of a behavior in the power transmission circuit 3. For example, the threshold Th1 may be set such that, when the power receiving circuit 6 is in a no-load state and then the power transmission resonance circuit 38 is driven, a phase difference between the current and the voltage of the power transmission resonance circuit 38 appears so as to be detectable. For example, it is possible to measure or calculate the phase difference between the current and the voltage of the power transmission resonance circuit 38 when the power receiving circuit 6 is in a no-load state by variously changing Th1 in Expression (1) above under a condition that satisfies an expression obtained by replacing an inequality sign ">" on a left side of Th1 with an equality sign "=". Thus, the value of Th1 with which the phase difference between the current and the voltage of the power transmission resonance circuit 38 is the predetermined value or more may be determined.

Also, from another viewpoint, in setting L1, C1, $\omega$, L2, and C2, the values of L1, C1, $\omega$, L2, and C2 may be set such that the power factor in a no-load state is larger than the power factor in a load state. For example, the values of L1, C1, $\omega$, L2, and C2 above may be determined such that the power factor $\cos\theta'$ in the no-load state expressed by Expression (15) above is larger than the power factor $\cos\theta$ in the load state expressed by Expression (12) above. In this case, the mutual inductance is a value that is determined using the coupling coefficient k (for example, k = 0.25) that is assumed in the power supply system.

Note that a method for determining L1, L2, C1, C2, and $\omega$ above which satisfy Expression (1) above is not limited to a specific method. For example, as described above, L1, L2, C2, and $\omega$ may be fixed, C1 may be changed, and thus, C1 that satisfies Expression (1) above may be determined. As another option, L1, L2, C1, and C2 may be fixed, $\omega$ may be changed, and thus, co that satisfies Expression (1) above may be determined.

For example, L2, C2, and $\omega$ on the power receiving side may be set so as to satisfy the condition of the reactance X2 of the power receiving circuit in Expression (1) above in advance and at least one of L1 and C1 on the power transmission side may be adjusted such that the condition of the reactance X1 of the power transmission circuit in Expression (1) above is satisfied. On the other hand, L1, C1, and $\omega$ on the power transmission side may be set so as to satisfy the condition of the reactance X1 of the power receiving circuit in Expression (1) above in advance and at least one of L2 and C2 on the power receiving side may be adjusted such that the condition of the reactance X2 of the power transmission circuit in Expression (1) above is satisfied.

In Expression (1) above, the absolute value of the reactance X1 is |X1| > Th1. In this condition, an upper limit of the absolute value of the reactance X1 may be set. That is, in Expression (1) above, a range of the absolute value of the reactance X1 may be Th2 > |X1| > Th1. In this case, the threshold Th2 may be determined in accordance with the resistance $R_2$ of the power receiving circuit 6 and required power transmission efficiency. For example, a value of Th2 may be determined such that the efficiency $\eta$ in a load state, which is expressed by Expression (11) above, is required efficiency (a predetermined required value) or larger. In this case, the value of the mutual inductance in Expression (11) above may be a value that is determined using the coupling coefficient k that is assumed in the power supply system. That is, the threshold Th2 of the upper limit of the absolute value of the reactance X1 may be determined such that the efficiency η that is calculated using the resistance $R_2$ of the power receiving circuit 6, the mutual inductance M, the resistance value R of the load, the driving frequency ω, and the resistance r1 of the power transmission resonance circuit 38 satisfy a predetermined condition (that is, a required condition).

<Operation Example>

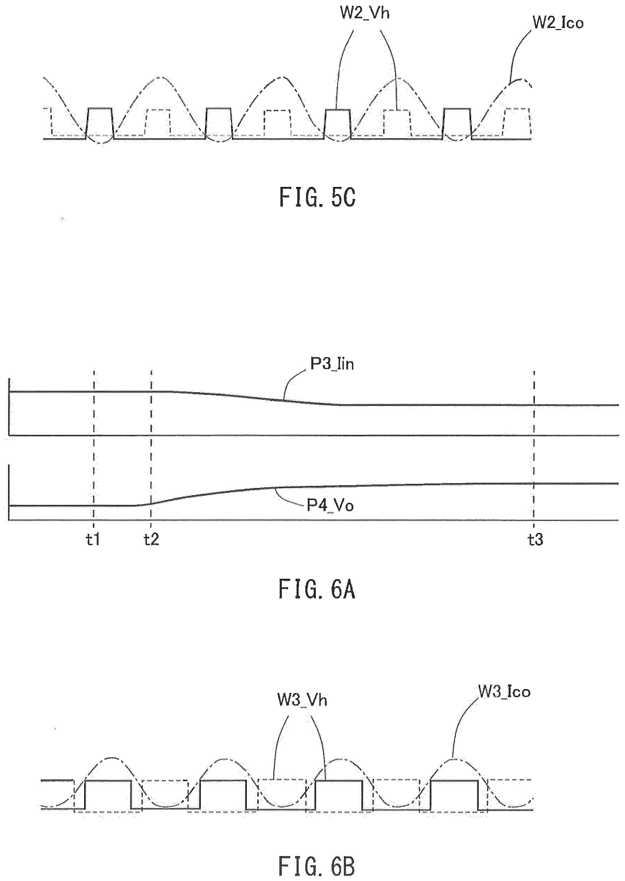

FIG. 5A, FIG. 5B, and FIG. 5C are graphs each illustrating an example of waveforms of various types of signals when the power supply system illustrated in FIG. 1 is driven under the typical resonance condition expressed in Expression (2) above. In FIG. 5A to FIG. 5C, an abscissa indicates time and an ordinate indicates the intensity of a signal.

In FIG. 5A, a signal P1_Iin indicates a waveform of a DC current that is detected by the DC current sensor 36 of the power transmission circuit 3. A signal P2_Vo indicates a waveform of a power reception voltage that is detected by the detection unit 63. Before time t2, the power receiving circuit 6 is in a load state and, after the time t2, the power receiving circuit 6 is in a no-load state. That is, at the time t2, connection between the power receiving circuit 6 and the battery 96 is cut off, and thereafter, a cutoff state continues. The power transmission circuit 3 continues driving before and after the time t2.

In the example illustrated in FIG. 5A, when the power receiving circuit 6 is put in a no-load state, a current that has been generated in the power receiving resonance circuit 61 has lost a way, and therefore, the power reception voltage increases (the signal P2_Vo). When a power supply voltage of a DC power supply unit 30 was set to be 24 V and then an experiment was conducted, after about 100 ms elapsed since the power receiving circuit 6 had been put in a no-load state, the power reception voltage reached about 100 V.

FIG. 5B is a graph illustrating an example of waveforms of a coil current (indicated by a signal W1_Ico) of the power transmission coil (L1) and an output voltage (indicated by a signal W1_Vh) of the inverter 31 in a period (that is, a period of a load state) including time t1 in the graph illustrated in FIG. 5A. FIG. 5C is a graph illustrating an example of waveforms of a coil current (indicated by a signal W2_Ico) of the power transmission coil (L1) and an output voltage (indicated by a signal W2_Vh) of the inverter 31 in a period (that is, a period of a no-load state) including time t3 of the graph illustrated in FIG. 5A.

In examples illustrated in FIG. 5B and FIG. 5C, both in the load state and in the no-load state, phases of the output voltage of the inverter 31 and the coil current of the power transmission coil (L1) are synchronized with one another. That is, the phases of the current and the voltage of the power transmission resonance circuit 38 are substantially not shifted. In this example, both when the power receiving circuit 6 is in a load state and when the power receiving circuit 6 is in a no-load state, the power transmission resonance circuit 38 resonances and the power factor is high.

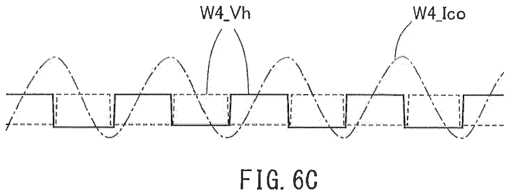

FIG. 6A, FIG. 6B, and FIG. 6C are graphs each illustrating an example of waveforms of various types of signals when the power supply system illustrated in FIG. 1 is driven under the resonance condition expressed in Expression (1) above. In FIG. 6A to FIG. 6C, an abscissa indicates time and an ordinate indicates the intensity of a signal.

In FIG. 6A, a signal P3_Iin indicates a waveform of a DC current that is detected by the DC current sensor 36 of the power transmission circuit 3. A signal P4_Vo indicates a waveform of a power reception voltage that is detected by the detection unit 63. Before time t2, the power receiving circuit 6 is in a load state and, after the time t2, the power receiving circuit 6 is in a no-load state. The power transmission circuit 3 continues driving before and after the time t2.

In an example illustrated in FIG. 6A, when the power receiving circuit 6 is put in a no-load state, the power reception voltage increases (the signal P4_Vo). When the power supply voltage of the DC power supply unit 30 was set to be 24 V and then an experiment was conducted, after about 10 ms elapsed since the power receiving circuit 6 had been put in a no-load state, the increase in voltage stopped and the power reception voltage stayed at about 40 V. As compared to a case illustrated in FIG. 5A, increase in the power reception voltage was restrained. When the power receiving circuit 6 is put in a no-load state, the DC current of the power transmission circuit 3, that is, a current that is input from the DC power supply unit 30 to the inverter 31, has been reduced (a signal P3_Iin).

FIG. 6B is a graph illustrating an example of waveforms of a coil current (indicated by a signal W3_Ico) of the power transmission coil (L1) and an output voltage (indicated by a signal W3_Vh) of the inverter 31 in a period (that is, a period of a load state) including time t1 of the graph illustrated in FIG. 6A. FIG. 6C is a graph illustrating an example of waveforms of a coil current (indicated by a signal W4_Ico) of the power transmission coil (L1) and an output voltage (indicated by a signal W4_Vh) of the inverter 31 in a period (that is, a period of a no-load state) including time t3 of the graph illustrated in FIG. 6A.

As illustrated in FIG. 6B, when the power receiving circuit 6 is in a load state, phases of the output voltage of the inverter 31 and the coil current of the power transmission coil (L1) are synchronized with one another. Therefore, power transmission with a high power factor and high efficiency is performed. As illustrated in FIG. 6C, when the power receiving circuit 6 is put in a no-load state, the phases of the output voltage of the inverter 31 and the coil current of the power transmission coil (L1) are shifted from one another by about 90 degrees. Therefore, the power factor is low. Therefore, increase in the power reception voltage of the power receiving circuit 6 is restrained. Also, the level of an input current to the inverter 31 is reduced.

<Example of Fault Detection>

The detection unit 5 is able to detect a no-load state of the power receiving circuit 6, based on a DC current that is detected by the DC current sensor 36. For example, when the level of the DC current is out of a predetermined range, the detection unit 5 is able to detect a no-load state of the power receiving circuit 6. Alternatively, when a width of drop of the level of the DC current is a predetermined value or more, the detection unit 5 is able to detect a no-load state of the power receiving circuit 6.

Alternatively, the detection unit 5 is also able to detect a no-load state of the power receiving circuit 6, based on a phase difference between the current and the voltage of the power transmission resonance circuit 38. When the phase difference between the phase of the current and the phase of the voltage of the power transmission resonance circuit 38 is, for example, a predetermined value or more, the detection unit 5 is able to detect a no-load state of the power receiving circuit 6. It is possible to calculate the phase difference between the current and the voltage of the power transmission resonance circuit 38 from the current and the voltage that are detected by the coil voltage current detection unit 37.

Note that the detection unit 5 is also able to determine, using both of the DC current of the power transmission circuit 3 and the phase difference between the current and the voltage of the power transmission resonance circuit 38, whether or not there is a no-load state of the power receiving circuit 6. Also, the detection unit 5 may be configured to detect some other fault than a fault that the power-receiving circuit 6 is in a no-load state.

<Example of Application to Charging System for Straddled Vehicle>

An example of a case in which the power supply system illustrated in FIG. 1 is applied to a charging system for a straddled vehicle will be described below. In this case, for example, a power transmission circuit 3, a control unit 4, and a DC power supply unit 30 may be provided in a power supply device in a parking area. A power receiving circuit 6, a BMC 91, and a vehicle load 95 are provided in the straddled vehicle.

The power transmission circuit 3 may be configured to employ the DC power supply unit 30 of a constant voltage as an input power source. In this case, a DC current that is input to the power transmission circuit 3 is controlled to be constant. Thus, power that is supplied from the power transmission circuit 3 to the power receiving circuit 6 is constant-power controlled. Therefore, on the power receiving side, even without using a charging DC-DC converter, charging using a simple circuit including only a rectifier and a filter circuit is enabled.

In the above-described structure, if, while power is supplied from the power transmission circuit 3 to the power receiving circuit 6, the charging switch SWc of the BMC 91 forcibly blocks the supply because the battery 96 is fully charged or the like, the power receiving circuit 6 is in a no-load state. Since an air gap between the power transmission coil (L1) and the power receiving coil (L2) is far larger than that of a regular transformer, the coupling coefficient is small and, conventionally, it has been difficult to detect a no-load state on a power transmission circuit 3 side. If the power transmission circuit 3 is not able to detect a no-load state of the power receiving circuit 6, the power transmission circuit 3 continues power supply. As a result, the power receiving circuit 6 is in an overvoltage state at a filter circuit end.

In this embodiment, the power receiving circuit 6 and the power transmission circuit 3 are configured such that, when the power receiving circuit 6 is put in a no-load state, the DC current of the power transmission circuit 3 is also reduced. The detection unit 5 is able to detect a no-load state by detecting this change of the DC current. When the detection unit 5 detects a no-load state, the control unit 7 is able to stop power supply by the power transmission circuit 3.

<Advantages of Embodiments>

The power supply system 1 of this embodiment transmits power efficiently when the power receiving circuit 6 is in a load state and circuit conditions for the power transmission circuit 3 and the power receiving circuit 6 are set such that, when the power receiving circuit 6 is put in a no-load state, a change that is detectable occurs in operation of the power transmission circuit 3. Furthermore, the power supply system 1 includes the detection unit 5 that detects a fault of the power receiving circuit 6, based on an operation of the power transmission circuit 3. By this structure, it is possible both to ensure power transmission efficiency and to cope with a no-load state when the power receiving circuit 6 is in the no-load state.

Also, in the power transmission circuit 3, it is possible to detect a no-load state of the power receiving circuit 6, and therefore, in the power transmission circuit 3, it is possible to properly and quickly cope with a no-load state by stopping power transmission or the like. Furthermore, wireless communications between the power transmission side and the power receiving side, which are performed for transmitting a no-load state or the like, becomes not necessary.

For example, as in a power supply system of a straddled vehicle, when high output power transmission is required, an influence when the power receiving circuit 6 is put in a no-load state increases. In such a wireless power supply system, when power is transmitted in a state in which a load is not coupled to the power receiving circuit, in the power receiving circuit, there is not an escapeway for a current and the voltage continues to increase.

When, as a countermeasure for coping with increase in voltage of the power receiving circuit in a no-load state, a breakdown voltage performance of a component of the power receiving circuit is improved, increase in cost and size of the power supply system is caused. Also, as a countermeasure, a sequence of informing that the power receiving circuit has been put in a no-load state to the power transmission side via a wireless communication and stopping power transmission may be incorporated. In this case, when a fault occurs in a battery, the battery may be possibly cut off from the power receiving circuit sooner than power transmission is stopped. Also, when a wireless communication function fails, the power receiving circuit is put in a no-load state sooner than power transmission is stopped.

In contrast, using the power supply system 1 of this embodiment, it is enabled to quickly cope with a no-load state when the power receiving circuit 6 is in a no-load state without relying on a wireless communication. Also, it is possible to restrain the degree of increase in voltage of the power receiving circuit when the power receiving circuit is in a no-load state. Thus, countermeasures, such as improving breakdown voltage performance of the power receiving circuit 6, wireless communications between the power transmission side and the power receiving side, or the like, which are taken to cope with a no-load state, become unnecessary or are less needed. As a result, increase in cost and size of the power supply system may be suppressed. As described above, the power supply system 1 of this embodiment is preferably applied to a power supply system which is required to perform high output power transmission and in which the power receiving circuit 6 is possibly put in a no-load state.

<Modified Example>

The present teaching is not limited to the above-described embodiment. For example, as a countermeasure that is taken when the detection unit 5 detects a no-load state, in addition to stopping the power transmission circuit 3, a report, such as an alarm output or the like, may be given. Also, another circuit element may be added to the power transmission circuit 3 and the power receiving circuit 6. Also, the power supply system 1 may include a communication device that performs wireless communications between the power transmission side and the power receiving side.

The structures of the power transmission resonance circuit 38 and the power receiving resonance circuit 61 are not limited to the examples of the above-described embodiment. In the above-described examples, each of the power transmission resonance circuit 38 and the power receiving resonance circuit 61 has a structure including an inductor and a capacitor that are coupled to one another in series, but at least one of the power transmission resonance circuit 38 and the power receiving resonance circuit 61 may have a structure including an inductor and a capacitor that are coupled to one another in parallel. In this case, the reactance X1 of the power transmission resonance circuit 38 and the reactance X2 of the power receiving resonance circuit 61 may be calculated in accordance with Expressions (16) and (17) below.

$$X1 = |\omega L1/(1 - \omega^2 L1C1)| \qquad (16)$$

$$X2 = |\omega L2/(1 - \omega^2 L2C2)| \qquad (17)$$

In the above-described example, as the self-inductance L1 that is used for determining the reactance X1, self-inductance of a power transmission coil is used. For example, for the self-inductance of the power transmission coil, when floating inductance or parasite inductance in a wiring of the power transmission resonance circuit 38 is not negligible, the reactance X1 may be determined using a value of the self-inductance L1 in consideration of the floating inductance or the parasite inductance.

In the above-described example, as the self-inductance L2 that is used for determining the reactance X2, self-inductance of a power receiving coil is used. For example, for the self-inductance of the power receiving coil, when floating inductance or parasite inductance in a wiring of the power receiving resonance circuit 61 is not negligible, the reactance X2 may be determined using a value of the self-inductance L2 in consideration of the floating inductance or the parasite inductance.

When floating capacity or parasitic capacity in the wiring of the power transmission resonance circuit 38 is not negligible, for capacity of a capacitor as a component of the power transmission resonance circuit 38, as the capacity C1 that is used for determining the reactance X1, a value in consideration of the floating capacity or the parasitic capacity may be used.

When floating capacity or parasitic capacity in the wiring of the power receiving resonance circuit 61 is not negligible, for capacity of a capacitor as a component of the power receiving resonance circuit 61, as the capacity C2 that is used for determining the reactance X2, a value in consideration of the floating capacity or the parasitic capacity may be used.

As has been described above, a detection unit is able to detect a fault of a power transmission circuit or a power receiving circuit, based on at least one of a DC voltage, a DC current, a voltage of the power transmission coil, a current of a power transmission coil, and temperature of the power transmission coil in the power transmission circuit. For example, the detection unit 5 may be configured to detect a no-load state of the power receiving circuit using at least one of change in amplitude of an AC current change in amplitude of an AC voltage, or change in gate voltage waveform which controls a switching element (FET) of an inverter which has been generated in the power transmission resonance circuit 38.

A form of a no-load state is not limited to a particular form. Examples of a case in which the power receiving circuit 6 is put in a no-load state during power supply include, in addition to a case in which a load (for example, a battery) coupled to the power receiving circuit 6 is removed, a case in which a battery has failed, a case in which a battery has been fully charged and a charging circuit is cut off, a case in which a wiring between a power receiving unit and a load is disconnected, and the like.

Use of the power supply system 1 is not limited to charging a straddled vehicle. A power supply system according to the present teaching may be used for charging a vehicle of some other type or an electronic device. Also, a power supply system according to the present teaching may be used for some other purpose than charging.

REFERENCE SIGNS LIST

| | |
|---|---|
| 1 | Power supply system |
| 3 | Power transmission circuit |
| 4 | Control unit |
| 5 | Detection unit |
| 6 | Power receiving circuit |
| 7 | Control unit |
| 30 | DC power supply unit (an example of a DC power source) |
| 31 | Inverter |
| 38 | Power transmission resonance circuit (a resonance circuit on a primary side) |
| 61 | Power receiving resonance circuit (a resonance circuit on a secondary side) |

**Claims**

1. A power supply system (1) comprising:

   a power receiving circuit (6); and
   a power transmission circuit (3) configured to wirelessly supply power to the power receiving circuit (6),
   wherein the power transmission circuit (3) includes a power transmission resonance circuit (38) including an inductor having self-inductance L1 and a capacitor having capacity C1,
   the power receiving circuit (6) includes a power receiving resonance circuit (61) including an inductor having self-inductance L2 and a capacitor having capacity C2,
   the power transmission resonance circuit (38) is configured to be driven at a driving frequency $\omega$ and thereby to perform power transmission from the power transmission circuit (3) to the power receiving circuit (6),
   the self-inductance L1, the capacity C1, the self-inductance L2, the capacity C2, and the driving frequency $\omega$ are set such that an absolute value of a reactance X1 of the power transmission resonance circuit (38), which is determined by the self-inductance L1, the capacity C1, and the driving frequency $\omega$, is larger than a first threshold Th1 that is not smaller than 0 and also a reactance X2 of the power receiving resonance circuit (61), which is determined by the self-inductance L2, the capacity C2, and the driving frequency $\omega$, is 0, which in addition includes a case in which there is an error with which, in terms of an operation of the power receiving circuit (6), the condition that X2 is 0 is substantially satisfied, and
   the power supply system (1) includes a detection unit (5) configured to detect a no-load state of the power receiving circuit (6), based on at least one of a DC voltage, a DC current, a voltage of the inductor having self-inductance L1, a current of the inductor having self-inductance L1, or temperature of the inductor having self-inductance L1 in the power transmission circuit (3).

2. The power supply system (1) according to claim 1,

wherein, when the power receiving circuit (6) is in a no-load state and then the power transmission resonance circuit (38) is driven, the threshold Th1 is set to be a value with which a phase difference between a phase of a current and a phase of a voltage of the power transmission resonance circuit (38) is detectable.

3. The power supply system (1) according to claim 1 or 2,
wherein the self-inductance L1 of the inductor of the power transmission resonance circuit (38), the capacity C1 of the capacitor of the power transmission resonance circuit (38), the self-inductance L2 of the inductor of the power receiving resonance circuit (61), the capacity C2 of the capacitor of the power receiving resonance circuit (61), and the driving frequency ω are set such that a power factor when there is a load in the power receiving circuit (6) is larger than a power factor when the power receiving circuit (6) is in a no-load state.

4. The power supply system (1) according to any one of claims 1 to 3,
wherein the threshold Th1 is the same as or larger than resistance r1 of the power transmission resonance circuit (38).

5. The power supply system (1) according to any one of claims 1 to 4,
wherein the power transmission circuit (3) includes an inverter (31) configured to convert a DC current from a DC power source to an AC current and to supply the AC current to the power transmission resonance circuit (38), and the detection unit (5) is configured to detect a no-load state of the power receiving circuit (6), based on a value of the DC current or a phase difference between a phase of a current and a phase of a voltage of the power transmission resonance circuit (38).

6. The power supply system (1) according to any one of claims 1 to 5, further comprising:
a control unit (7) configured to stop power transmission by the power transmission circuit (3) when the detection unit (5) detects a no-load state of the power receiving circuit (6).

7. A power transmission circuit (3) configured to wirelessly supply power to a power receiving circuit (6) which includes a power receiving resonance circuit (61) including an inductor having self-inductance L2 and a capacitor having capacity C2 and in which a reactance X2 of the power receiving resonance circuit (61), which is determined by the self-inductance L2, the capacity C2, and a driving frequency ω, is 0, which in addition includes a case in which there is an error with which, in terms of an operation of the power receiving circuit (6), the condition that X2 is 0 is substantially satisfied, the power transmission circuit (3) comprising:

a power transmission resonance circuit (38) including an inductor having self-inductance L1 and a capacitor having capacity C1; and
a detection unit (5) configured to detect a no-load state of the power receiving circuit (6), based on at least one of a DC voltage, a DC current, a voltage of the inductor having self-inductance L1, a current of the inductor having self-inductance L1, or temperature of the inductor having self-inductance L1 in the power transmission circuit (3),
wherein the power transmission resonance circuit (38) is configured to be driven at the driving frequency ω and thereby to perform power transmission from the power transmission circuit (3) to the power receiving circuit (6), and
at least one of the self-inductance L1 and the capacity C1 is adjusted such that an absolute value of reactance X1 of the power transmission resonance circuit (38), which is determined by the self-inductance L1, the capacity C1, and the driving frequency ω, is larger than a first threshold Th1 that is not smaller than 0.

8. The power transmission circuit (3) according to claim 7,
wherein, when the power receiving circuit (6) is in a no-load state and then the power transmission resonance circuit (38) is driven, the threshold Th1 is set to be a value with which a phase difference between a phase of a current and a phase of a voltage of the power transmission resonance circuit (38) is detectable.

9. The power transmission circuit (3) according to claim 7 or 8,
wherein the self-inductance L1 of the inductor of the power transmission resonance circuit (38), the capacity C1 of the capacitor of the power transmission resonance circuit (38), and the driving frequency ω are set such that a power factor when there is a load in the power receiving circuit (6) is larger than a power factor when the power receiving circuit (6) is in a no-load state.

10. The power transmission circuit (3) according to any one of claims 7 to 9,
wherein the threshold Th1 is the same as or larger than resistance r1 of the power transmission resonance circuit (38).

**11.** The power transmission circuit (3) according to any one of claims 7 to 10, further comprising:
an inverter (31) configured to convert a DC current from a DC power source to an AC current and to supply the AC current to the power transmission resonance circuit (38),
wherein the detection unit (5) is configured to detect a no-load state of the power receiving circuit (6) based on a value of the DC current or a phase difference between a current and a voltage of the power transmission resonance circuit (38).

**12.** The power transmission circuit (3) according to any one of claims 7 to 11,
configured to, when a no-load state of the power receiving circuit (6) is detected, stop power transmission by the power transmission circuit (3).

**Patentansprüche**

**1.** Ein Leistungszufuhrsystem (1), das folgende Merkmale aufweist:

einen Leistungsaufnahmeschaltkreis (6); und
einen Leistungsübertragungsschaltkreis (3), der dazu ausgebildet ist, dem Leistungsaufnahmeschaltkreis (6) Leistung auf drahtlose Weise zuzuführen,
wobei der Leistungsübertragungsschaltkreis (3) einen Leistungsübertragungsresonanzschaltkreis (38) umfasst, der einen Induktor mit einer Selbstinduktivität L1 und einen Kondensator mit einer Kapazität C1 umfasst,
der Leistungsaufnahmeschaltkreis (6) einen Leistungsaufnahmeresonanzschaltkreis (61) umfasst, der einen Induktor mit einer Selbstinduktivität L2 und einen Kondensator mit einer Kapazität C2 umfasst,
der Leistungsübertragungsresonanzschaltkreis (38) dazu ausgebildet ist, mit einer Antriebsfrequenz $\omega$ angetrieben zu werden und dadurch eine Leistungsübertragung von dem Leistungsübertragungsschaltkreis (3) zu dem Leistungsaufnahmeschaltkreis (6) auszuführen,
die Selbstinduktivität L1, die Kapazität C1, die Selbstinduktivität L2, die Kapazität C2 und die Antriebsfrequenz $\omega$ derart eingestellt sind, dass ein absoluter Wert einer Reaktanz X1 des Leistungsübertragungsresonanzschaltkreises (38), die durch die Selbstinduktivität L1, die Kapazität C1 und die Antriebsfrequenz $\omega$ bestimmt wird, größer ist als eine erste Schwelle Th1, die nicht kleiner als 0 ist, und auch eine Reaktanz X2 des Leistungsaufnahmeresonanzschaltkreises (61), die durch die Selbstinduktivität L2, die Kapazität C2 und die Antriebsfrequenz $\omega$ bestimmt wird, gleich 0 ist, was zusätzlich einen Fall umfasst, bei dem ein Fehler vorliegt, mit dem in Hinblick auf einen Betrieb des Leistungsaufnahmeschaltkreises (6) die Bedingung, dass X2 gleich 0 ist, im Wesentlichen erfüllt ist, und
das Leistungszufuhrsystem (1) eine Detektionseinheit (5) umfasst, die dazu ausgebildet ist, einen Leerlaufzustand des Leistungsaufnahmeschaltkreises (6) zu detektieren, auf der Basis einer Gleichspannung, eines Gleichstromes, einer Spannung des Induktors mit einer Selbstinduktivität L1, eines Stromes des Induktors mit einer Selbstinduktivität L1 und/oder einer Temperatur des Induktors mit einer Selbstinduktivität L1 in dem Leistungsübertragungsschaltkreis (3).

**2.** Das Leistungszufuhrsystem (1) gemäß Anspruch 1,
wobei dann, wenn der Leistungsaufnahmeschaltkreis (6) in einem Leerlaufzustand ist und dann der Leistungsübertragungsresonanzschaltkreis (38) angetrieben wird, die Schwelle Th1 dahingehend eingestellt wird, einen Wert einzunehmen, mit dem eine Phasendifferenz zwischen einer Phase eines Stromes und einer Phase einer Spannung des Leistungsübertragungsresonanzschaltkreises (38) detektierbar ist.

**3.** Das Leistungszufuhrsystem (1) gemäß Anspruch 1 oder 2,
wobei die Selbstinduktivität L1 des Induktors des Leistungsübertragungsresonanzschaltkreises (38), die Kapazität C1 des Kondensators des Leistungsübertragungsresonanzschaltkreises (38), die Selbstinduktivität L2 des Induktors des Leistungsaufnahmeresonanzschaltkreises (61), die Kapazität C2 des Kondensators des Leistungsaufnahmeresonanzschaltkreises (61) und die Antriebsfrequenz $\omega$ derart eingestellt sind, dass ein Leistungsfaktor dann, wenn eine Last in dem Leistungsaufnahmeschaltkreis (6) vorliegt, größer ist als ein Leistungsfaktor, wenn der Leistungsaufnahmeschaltkreis (6) in einem Leerlaufzustand ist.

**4.** Das Leistungszufuhrsystem (1) gemäß einem der Ansprüche 1 bis 3,
wobei die Schwelle Th1 gleich groß wie oder größer als ein Widerstand r1 des Leistungsübertragungsresonanzschaltkreises (38) ist.

**5.** Das Leistungszufuhrsystem (1) gemäß einem der Ansprüche 1 bis 4, wobei der Leistungsübertragungsschaltkreis (3) einen Inverter (31) umfasst, der dazu ausgebildet ist, einen Gleichstrom aus einer Gleichstromquelle in einen Wechselstrom umzuwandeln und dem Leistungsübertragungsresonanzschaltkreis (38) den Wechselstrom zuzuführen, und

die Detektionseinheit (5) dazu ausgebildet ist, einen Leerlaufzustand des Leistungsaufnahmeschaltkreises (6) zu detektieren, auf der Basis eines Wertes des Gleichstromes oder einer Phasendifferenz zwischen einer Phase eines Stromes und einer Phase einer Spannung des Leistungsübertragungsresonanzschaltkreises (38).

**6.** Das Leistungszufuhrsystem (1) gemäß einem der Ansprüche 1 bis 5, das ferner folgende Merkmale aufweist:
eine Steuereinheit (7), die dazu ausgebildet ist, eine Leistungsübertragung durch den Leistungsübertragungsschaltkreis (3) dann zu stoppen, wenn die Detektionseinheit (5) einen Leerlaufzustand des Leistungsaufnahmeschaltkreises (6) detektiert.

**7.** Ein Leistungsübertragungsschaltkreis (3), der dazu ausgebildet ist, einem Leistungsaufnahmeschaltkreis (6) Leistung auf drahtlose Weise zuzuführen, der einen Leistungsaufnahmeresonanzschaltkreis (61) einschließlich eines Induktors mit einer Selbstinduktivität L2 und eines Kondensators mit einer Kapazität C2 umfasst und bei dem eine Reaktanz X2 des Leistungsaufnahmeresonanzschaltkreises (61), die durch die Selbstinduktivität L2, die Kapazität C2 und eine Antriebsfrequenz ω bestimmt wird, gleich 0 ist, was zusätzlich einen Fall umfasst, bei dem ein Fehler vorliegt, mit dem in Hinblick auf einen Betrieb des Leistungsaufnahmeschaltkreises (6) die Bedingung, dass X2 gleich 0 ist, im Wesentlichen erfüllt ist, wobei der Leistungsübertragungsschaltkreis (3) folgende Merkmale aufweist:

einen Leistungsübertragungsresonanzschaltkreis (38), der einen Induktor mit einer Selbstinduktivität L1 und einen Kondensator mit einer Kapazität C1 umfasst; und
eine Detektionseinheit (5), die dazu ausgebildet ist, einen Leerlaufzustand des Leistungsaufnahmeschaltkreises (6) zu detektieren, auf der Basis einer Gleichspannung, eines Gleichstromes, einer Spannung des Induktors mit einer Selbstinduktivität L1, eines Stromes des Induktors mit einer Selbstinduktivität L1 und/oder einer Temperatur des Induktors mit einer Selbstinduktivität L1 in dem Leistungsübertragungsschaltkreis (3),
wobei der Leistungsübertragungsresonanzschaltkreis (38) dazu ausgebildet ist, bei der Antriebsfrequenz ω angetrieben zu werden und dadurch eine Leistungsübertragung von dem Leistungsübertragungsschaltkreis (3) zu dem Leistungsaufnahmeschaltkreis (6) auszuführen, und
die Selbstinduktivität L1 und/oder die Kapazität C1 derart eingestellt sind, dass ein absoluter Wert einer Reaktanz X1 des Leistungsübertragungsresonanzschaltkreises (38), die durch die Selbstinduktivität L1, die Kapazität C1 und die Antriebsfrequenz ω bestimmt wird, größer als eine erste Schwelle Th1 ist, die nicht kleiner als 0 ist.

**8.** Der Leistungsübertragungsschaltkreis (3) gemäß Anspruch 7,
wobei dann, wenn der Leistungsaufnahmeschaltkreis (6) in einem Leerlaufzustand ist und dann der Leistungsübertragungsresonanzschaltkreis (38) angetrieben wird, die Schwelle Th1 dahingehend eingestellt wird, einen Wert anzunehmen, mit dem eine Phasendifferenz zwischen einer Phase eines Stromes und einer Phase einer Spannung des Leistungsübertragungsresonanzschaltkreises (38) detektierbar ist.

**9.** Der Leistungsübertragungsschaltkreis (3) gemäß Anspruch 7 oder 8,
wobei die Selbstinduktivität L1 des Induktors des Leistungsübertragungsresonanzschaltkreises (38), die Kapazität C1 des Kondensators des Leistungsübertragungsresonanzschaltkreises (38) und die Antriebsfrequenz ω derart eingestellt sind, dass ein Leistungsfaktor dann, wenn eine Last in dem Leistungsaufnahmeschaltkreis (6) vorliegt, größer ist als ein Leistungsfaktor, wenn der Leistungsaufnahmeschaltkreis (6) in einem Leerlaufzustand ist.

**10.** Der Leistungsübertragungsschaltkreis (3) gemäß einem der Ansprüche 7 bis 9,
wobei die Schwelle Th1 gleich groß wie oder größer ist als ein Widerstand r1 des Leistungsübertragungsresonanzschaltkreises (38).

**11.** Der Leistungsübertragungsschaltkreis (3) gemäß einem der Ansprüche 7 bis 10, welcher ferner die folgenden Merkmale aufweist:

einen Inverter (31), der dazu ausgebildet ist, einen Gleichstrom von einer Gleichstromquelle in einen Wechselstrom umzuwandeln und dem Leistungsübertragungsresonanzschaltkreis (38) den Wechselstrom zuzuführen,
wobei die Detektionseinheit (5) dazu ausgebildet ist, einen Leerlaufzustand des Leistungsaufnahmeschaltkreises (6) auf der Basis eines Wertes des Gleichstromes oder einer Phasendifferenz zwischen einem Strom und einer Spannung des Leistungsübertragungsresonanzschaltkreises (38) zu detektieren.

**12.** Der Leistungsübertragungsschaltkreis (3) gemäß einem der Ansprüche 7 bis 11,
der dazu ausgebildet ist, eine Leistungsübertragung durch den Leistungsübertragungsschaltkreis (3) dann zu stoppen, wenn ein Leerlaufzustand des Leistungsaufnahmeschaltkreises (6) detektiert wird.

**Revendications**

**1.** Système d'alimentation de courant électrique (1), comprenant:

un circuit de réception d'énergie (6); et
un circuit de transmission d'énergie (3) configuré pour alimenter sans fil de l'énergie vers le circuit de réception d'énergie (6),
dans lequel le circuit de transmission d'énergie (3) comporte un circuit de résonance de transmission d'énergie (38) comportant un inducteur présentant un auto-inductance L1 et un condensateur présentant une capacité C1,
le circuit de réception d'énergie (6) comporte un circuit de résonance de réception d'énergie (61) comportant un inducteur présentant une auto-inductance L2 et un condensateur présentant une capacité C2,
le circuit de résonance de transmission d'énergie (38) est configuré pour être piloté à une fréquence de pilotage $\omega$ et pour ainsi effectuer une transmission d'énergie du circuit de transmission d'énergie (3) au circuit de réception d'énergie (6),
l'auto-inductance L1, la capacité C1, l'auto-inductance L2, la capacité C2 et la fréquence de pilotage $\omega$ sont réglées de sorte qu'une valeur absolue d'une réactance X1 du circuit de résonance de transmission d'énergie (38) qui est déterminée par l'auto-inductance L1, la capacité C1 et la fréquence de pilotage $\omega$ soit supérieure à un premier seuil Th1 qui n'est pas inférieur à 0 et également qu'une réactance X2 du circuit de résonance de réception d'énergie (61) qui est déterminée par l'auto-inductance L2, la capacité C2 et la fréquence de pilotage $\omega$ soit égale à 0, ce qui inclut par ailleurs un cas où il existe une erreur par laquelle, en termes de fonctionnement du circuit de réception d'énergie (6), la condition que X2 soit 0 est sensiblement remplie, et
le système d'alimentation de courant électrique (1) comporte une unité de détection (5) configurée pour détecter un état de non-chargement du circuit de réception d'énergie (6), sur base d'au moins une tension CC, un courant continu, une tension de l'inducteur présentant une auto-inductance L1, un courant de l'inducteur présentant une auto-inductance L1, ou la température de l'inducteur présentant une auto-inductance L1 dans le circuit de transmission d'énergie (3).

**2.** Système d'alimentation de courant électrique (1) selon la revendication 1,
dans lequel, lorsque le circuit de réception d'énergie (6) se trouve dans un état de non-chargement et que le circuit de résonance de transmission d'énergie (38) est commandé, le seuil Th1 est réglé de manière à être une valeur par laquelle peut être détectée une différence de phase entre une phase d'un courant et une phase d'une tension du circuit de résonance de transmission d'énergie (38).

**3.** Système d'alimentation de courant électrique (1) selon la revendication 1 ou 2,
dans lequel l'auto-inductance L1 de l'inducteur du circuit de résonance de transmission d'énergie (38), la capacité C1 du condensateur du circuit de résonance de transmission d'énergie (38), l'auto-inductance L2 de l'inducteur du circuit de résonance de réception d'énergie (61), la capacité C2 du condensateur du circuit de résonance de réception d'énergie (61) et la fréquence de pilotage $\omega$ sont réglées de sorte qu'un facteur de puissance lorsqu'il y a une charge dans le circuit de réception d'énergie (6) soit supérieur à un facteur de puissance lorsque le circuit de réception d'énergie (6) se trouve dans un état de non-chargement.

**4.** Système d'alimentation de courant électrique (1) selon l'une quelconque des revendications 1 à 3,
dans lequel le seuil Th1 est identique ou supérieur à la résistance r1 du circuit de résonance de transmission d'énergie (38).

**5.** Système d'alimentation de courant électrique (1) selon l'une quelconque des revendications 1 à 4,
dans lequel le circuit de transmission de puissance (3) comporte un convertisseur (31) configuré pour convertir un courant CC d'une source d'alimentation de courant électrique CC en un courant CA et pour alimenter le courant CA vers le circuit de résonance de transmission d'énergie (38), et
l'unité de détection (5) est configurée pour détecter un état de non-chargement du circuit de réception d'énergie (6), sur base d'une valeur du courant CC ou d'une différence de phase entre une phase d'un courant et une phase d'une tension du circuit de résonance de transmission d'énergie (38).

**6.** Système d'alimentation de courant électrique (1) selon l'une quelconque des revendications 1 à 5, comprenant par ailleurs:
une unité de commande (7) configurée pour arrêter la transmission d'énergie par le circuit de transmission d'énergie (3) lorsque l'unité de détection (5) détecte un état de non-chargement du circuit de réception d'énergie (6).

**7.** Circuit de transmission d'énergie (3) configuré pour alimenter sans fil du courant électrique vers un circuit de réception d'énergie (6) qui comporte un circuit de résonance de réception d'énergie (61) comportant un inducteur présentant une auto-inductance L2 et un condensateur présentant une capacité C2 et dans lequel une réactance X2 du circuit de résonance de réception d'énergie (61) qui est déterminée par l'auto-inductance L2, la capacité C2 et une fréquence de pilotage ω est 0, qui comporte en outre un cas où il y a une erreur par laquelle, en termes de fonctionnement du circuit de réception d'énergie (6), la condition que X2 soit 0 est sensiblement remplie, le circuit de transmission d'énergie (3) comprenant:

un circuit de résonance de transmission d'énergie (38) comportant un inducteur présentant une auto-inductance L1 et un condensateur présentant une capacité C1; et
une unité de détection (5) configurée pour détecter un état de non-chargement du circuit de réception d'énergie (6), sur base d'au moins une tension CC, un courant CC, une tension de l'inducteur présentant une auto-inductance L1, un courant de l'inducteur présentant une auto-inductance L1, ou de la température de l'inducteur présentant une auto-inductance L1 dans le circuit de transmission d'énergie (3),
dans lequel le circuit de résonance de transmission d'énergie (38) est configuré pour être piloté à la fréquence de pilotage ω et pour ainsi effectuer une transmission d'énergie du circuit de transmission d'énergie (3) au circuit de réception d'énergie (6), et
au moins l'une parmi l'auto-inductance L1 et la capacité C1 est réglée de sorte qu'une valeur absolue de réactance X1 du circuit de résonance de transmission d'énergie (38) qui est déterminée par l'auto-inductance L1, la capacité C1 et la fréquence de pilotage ω soit supérieure à un premier seuil Th1 qui n'est pas inférieur à 0.

**8.** Circuit de transmission d'énergie (3) selon la revendication 7,
dans lequel, lorsque le circuit de réception d'énergie (6) se trouve dans un état de non-chargement et que le circuit de résonance de transmission d'énergie (38) est alors commandé, le seuil Th1 est réglé de manière à être une valeur par laquelle peut être détectée une différence de phase entre une phase d'un courant et une phase d'une tension du circuit de résonance de transmission d'énergie (38).

**9.** Circuit de transmission d'énergie (3) selon la revendication 7 ou 8,
dans lequel l'auto-inductance L1 de l'inducteur du circuit de résonance de transmission d'énergie (38), la capacité C1 du condensateur du circuit de résonance de transmission d'énergie (38) et la fréquence de pilotage ω sont réglées de sorte qu'un facteur de puissance lorsqu'il y a une charge dans le circuit de réception d'énergie (6) soit supérieur à un facteur de puissance lorsque le circuit de réception d'énergie (6) se trouve dans un état de non-chargement.

**10.** Circuit de transmission d'énergie (3) selon l'une quelconque des revendications 7 à 9,
dans lequel le seuil Th1 est identique ou supérieur à la résistance r1 du circuit de résonance de transmission d'énergie (38).

**11.** Circuit de transmission de puissance (3) selon l'une quelconque des revendications 7 à 10, comprenant par ailleurs:

un convertisseur (31) configuré pour convertir un courant CC d'une source d'alimentation CC en un courant CA et pour alimenter le courant CA vers le circuit de résonance de transmission d'énergie (38),
dans lequel l'unité de détection (5) est configurée pour détecter un état de non-chargement du circuit de réception d'énergie (6) sur base d'une valeur du courant CC ou d'une différence de phase entre un courant et une tension du circuit de résonance de transmission d'énergie (38).

**12.** Circuit de transmission d'énergie (3) selon l'une quelconque des revendications 7 à 11,
configuré pour arrêter, lorsqu'un état de non-chargement du circuit de réception d'énergie (6) est détecté, la transmission d'énergie par le circuit de transmission d'énergie (3).

FIG. 1

EP 3 413 434 B1

FIG. 2

FIG. 3

FIG. 4

FIG. 5A

FIG. 5B

W2_Vh                    W2_Ico

FIG. 5C

P3_Iin

P4_Vo

t1    t2                                    t3

FIG. 6A

W3_Vh                          W3_Ico

FIG. 6B

FIG. 6C

POWER-RECEIVING
CIRCUIT IS IN NO-LOAD
STATE AT OFF TIME

POWER
SOURCE

INVERTER

DC VOLTAGE

DC CURRENT CONTROL

CONTROL UNIT

DETECTION UNIT

COIL VOLTAGE CURRENT

LOAD

POWER RECEPTION VOLTAGE

CONTROL UNIT

DC CURRENT

COMPARATIVE EXAMPLE

$$X1 = \omega L1 - \frac{1}{\omega C1} = 0 \text{ AND } X2 = \omega L2 - \frac{1}{\omega C2} = 0$$

CURRENT WHEN

t2 = TIME POINT IN WHICH LOAD IS
CUT OFF FROM POWER-RECEIVING
CIRCUIT

DC CURRENT

EMBODIMENT

DETECT NO-LOAD

STOP POWER TRANSMISSION

CURRENT WHEN

$$X2 = \omega L2 - \frac{1}{\omega C2} = 0 \text{ AND } X1 = \left| \omega L1 - \frac{1}{\omega C1} \right| > Th1$$

t2 = TIME POINT IN WHICH LOAD IS
CUT OFF FROM POWER-RECEIVING
CIRCUIT

FIG. 7

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012034487 A
- US 2012306269 A1

- US 2013038136 A1

**Non-patent literature cited in the description**

- Study of high power contactless energy transmission for EV charging. **ZHANG C.H. et al.** 2014 IEEE INTERNATIONAL ENERGY CONFERENCE (ENERGYCON). IEEE, 13 May 2014, 157-162